(19) Europäisches Patentamt
European Patent Office
Office européen des brevets

(11) **EP 3 198 233 B1**

(12) **EUROPÄISCHE PATENTSCHRIFT**

(45) Veröffentlichungstag und Bekanntmachung des Hinweises auf die Patenterteilung:
**18.11.2020  Patentblatt 2020/47**

(21) Anmeldenummer: **15766522.5**

(22) Anmeldetag: **22.09.2015**

(51) Int Cl.:
***G01D 5/20*** *(2006.01)*

(86) Internationale Anmeldenummer:
**PCT/EP2015/071703**

(87) Internationale Veröffentlichungsnummer:
**WO 2016/046193 (31.03.2016 Gazette 2016/13)**

(54) **POSITIONSSENSOR**

POSITION SENSOR

CAPTEUR DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2014  DE 102014219009**

(43) Veröffentlichungstag der Anmeldung:
**02.08.2017  Patentblatt 2017/31**

(73) Patentinhaber: **Continental Teves AG & Co. OHG 60488 Frankfurt am Main (DE)**

(72) Erfinder: **ACKER, Heinrich 65824 Schwalbach (DE)**

(56) Entgegenhaltungen:
**EP-A1- 1 158 266     EP-B2- 1 721 130
DE-A1- 4 311 973     US-B1- 6 605 939**

**Beschreibung**

Die vorliegende Erfindung betrifft einen Positionssensor.

Eine Bremsanlage eines Kraftfahrzeuges umfasst häufig einen Tandemhauptzylinder, in welchem ein mit einem Bremspedal der Bremsanlage verbundener Kolben angeordnet ist. Da durch ein Erfassen der Position des Kolbens ein Pedalweg des Bremspedals erfasst werden kann, wird häufig ein Positionssensor zum Erfassen der Position des Kolbens in dem Tandemhauptzylinder integriert. Da der Tandemhauptzylinder häufig ein metallisches Gehäuse, beispielsweise ein Aluminiumgehäuse, umfasst, ist eine Erfassung der Position des Kolbens durch einen außerhalb des Tandemzylinders angeordneten Positionssensor erschwert.

Zur Erfassung der Position des Kolbens wird häufig ein linearer induktiver Positionssensor, wie ein Linear Inductive Position Sensor (LIPS), verwendet. Dieser umfasst häufig einen Differentialtransformator mit einer Primärspule und zwei Sekundärspulen. Als Primärspule und Sekundärspulen werden häufig Messspulen verwendet, welche aufwändig und kostenintensiv gewickelt werden. Ferner kann bei Verwendung eines metallischen Gehäuses eine Erfassung der Position des Kolbens mittels elektrischer oder magnetischer Wechselfelder durch eine hohe Leitfähigkeit des metallischen Gehäuses erschwert sein, insbesondere bei einem Aluminiumgehäuse. Zur Auswertung des linearen induktiven Positionssensors wird ferner häufig eine aufwändige und kostenintensive Elektronik verwendet. Ferner umfasst der lineare induktive Positionssensor häufig einen Differentialtransformatorkern, welcher häufig aus einem kostenintensiven Kernmaterial gefertigt wird. Vergleichbare Positionssensoren sind beispielsweise aus den Druckschriften US 6605939 B1, EP 1158266 A1, DE 4311973 A1 und EP1721130 B2 bekannt.

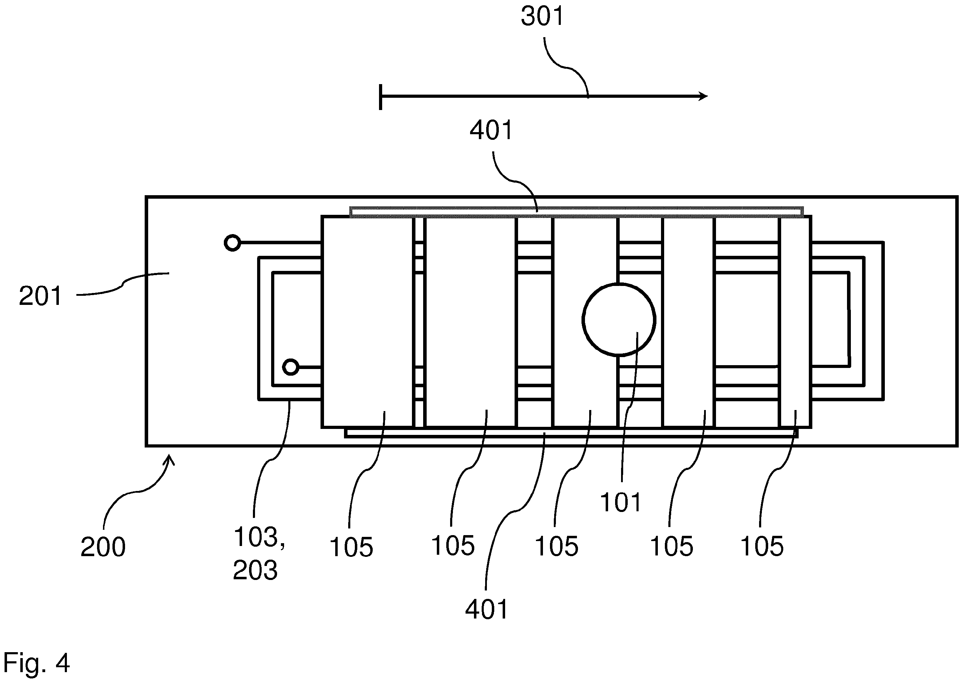

Es ist die der Erfindung zugrundeliegende Aufgabe, einen effizienteren und kostengünstigeren Positionssensor anzugeben. Diese Aufgabe wird durch den Gegenstand mit den Merkmalen nach dem unabhängigen Anspruch gelöst. Vorteilhafte Ausführungsformen der Erfindung sind Gegenstand der Figur 4 der Beschreibung und der abhängigen Ansprüche.

Gemäß einem Aspekt der Erfindung wird die Aufgabe durch einen Positionssensor zum Erfassen einer Position eines magnetischen Objekts entlang eines Weges gelöst, mit: einer Anzahl von verteilten magnetisierbaren Elementen, welche die planare Spule zumindest teilweise abdecken und mittels des magnetischen Objektes magnetisierbar sind, wodurch eine Impedanz der planaren Spule veränderbar ist, wobei die magnetisierbaren Elemente der Anzahl der verteilten magnetisierbaren Elemente entlang des Weges in Reihe an der planaren Spule angeordnet sind und mittels eines Steges entlang des Weges mechanisch miteinander verbunden sind; und einem Prozessor zum Bestimmen der Position des magnetischen Objekts in Abhängigkeit von der Impedanz der planaren Spule. Dadurch wird der Vorteil erreicht, dass die Position des magnetischen Objekts effizient erfasst werden kann.

Das magnetische Objekt kann in einen Kolben integriert sein, welcher ein Element einer Bremsanlage ist. Beispielsweise ist der Kolben in einem Tandemhauptzylinder der Bremsanlage aufgenommen und mit einem Bremspedal verbunden. Hierbei kann durch das Erfassen der Position des magnetischen Objekts die Position des Kolbens bestimmt werden. Ferner kann in Abhängigkeit von der erfassten Position des magnetischen Objekts ein durch das magnetische Objekt zurückgelegter Weg, wie ein Pedalweg des Bremspedals, eine Bewegungsrichtung, insbesondere ein Winkel einer Bewegung, des magnetischen Objekts, eine Geschwindigkeit des magnetischen Objekts und/oder eine Beschleunigung des magnetischen Objekts bestimmt werden, beispielsweise mittels des Prozessors. Ferner kann der Positionssensor ein Auslöseelement eines Bremslichtschalters bilden oder in einer Bremslichtsteuerung umfasst sein.

Die planare Spule kann auf einer Leiterplatte angeordnet sein. Beispielsweise weist die Leiterplatte eine Kupferbeschichtung auf, aus welcher die planare Spule durch einen Ätzprozess gebildet wurde. Ferner kann die planare Spule eine Mäanderform, eine Rechteckform, eine Trapezform oder eine Dreiecksform aufweisen. Hierbei kann die planare Spule abgerundete Ecken aufweisen.

Ein magnetisierbares Element kann ein flächiges ferromagnetisches Element umfassen. Ferner kann die Anzahl der verteilten magnetisierbaren Elemente an der planaren Spule, insbesondere zwischen der planaren Spule und dem magnetischen Objekt, angeordnet sein kann. Die planare Spule kann ferner zwischen der Anzahl der verteilten magnetisierbaren Elemente und dem magnetischen Objekt angeordnet sein. Ferner kann die Anzahl der verteilten magnetisierbaren Elemente die planare Spule zumindest teilweise umgeben. Gemäß einer Ausführungsform kann der Positionssensor ein weiteres magnetisierbares Element umfassen, wobei die planare Spule zwischen der Anzahl der verteilten magnetisierbaren Elemente und dem weiteren magnetisierbaren Element angeordnet ist. Ferner kann die Anzahl der verteilten magnetisierbaren Elemente und/oder das weitere magnetisierbare Element mit der Leiterplatte, auf welcher die planare Spule angeordnet ist, verlötet und/oder verklebt sein.

Der Prozessor kann zum Erfassen eines Wirkwiderstandes und/oder eines Blindwiderstandes der planaren Spule ausgebildet sein. Der Prozessor kann ferner eine Einrichtung zum Erfassen des Wirkwiderstands und/oder des Blindwiderstands der planaren Spule, eine Maxwell-Brückenschaltung und/oder eine Maxwell-Wien-Brückenschaltung umfassen. Ferner kann der Prozessor einen Kondensator umfassen und ausgebildet sein, eine Resonanzfrequenz eines durch die planare Spule und den Kondensator gebildeten Schwingkreises zu erfassen und die Impedanz der planaren Spule in Abhängigkeit von der Resonanzfrequenz und einer Kapazität des Kondensators zu bestimmen.

Beispielsweise wird die Impedanz der planaren Spule gemäß den folgenden Formeln bestimmt:

$$Z = R + jX;$$

$$X = \omega L;$$

und

$$\omega = 2\pi f;$$

wobei Z die Impedanz der planaren Spule, R den erfassten Wirkwiderstand der planaren Spule, X den erfassten Blindwiderstand, wie die erfasste Reaktanz, der planaren Spule, $\omega$ eine Kreisfrequenz und f eine Frequenz bezeichnet. Hierbei ist die Impedanz der planaren Spule eine komplexe Größe.

Gemäß einer Ausführungsform kann sowohl der Blindwiderstand der planaren Spule als auch der Wirkwiderstand der planaren Spule von der Position des magnetischen Objekts abhängen, da alle Verluste, beispielsweise durch Wirbelstrom, zu dem Wirkwiderstand der planaren Spule beitragen können, nicht nur der Gleichstromwiderstand der planaren Spule. Ferner kann die Induktivität der planaren Spule aus der Impedanz der planaren Spule bestimmt werden, weshalb das Erfassen der Impedanz der planaren Spule häufig als Induktivitätsmessung bezeichnet wird.

Der Prozessor kann ferner einen Mikrokontroller umfassen oder durch einen Mikrokontroller gebildet sein. Ferner kann der Positionssensor einen Speicher umfassen, in welchem Kalibrierungsdaten, insbesondere in Form einer Lookup-Tabelle, vorgespeichert sind. Der Prozessor kann ferner zur Bestimmung der Position des magnetischen Objekts auf der Basis der Impedanz und der Kalibrierungsdaten ausgebildet sein.

Die Anzahl der verteilten magnetisierbaren Elemente kann einen Spulenkern der planaren Spule bilden. Daher kann durch eine Änderung der magnetischen Eigenschaften des magnetisierbaren Elements eine Änderung der Impedanz der planaren Spule bewirkt werden. Befindet sich das magnetische Objekt nahe an der Anzahl der verteilten magnetisierbaren Elemente so kann eine zumindest teilweise magnetische Sättigung der magnetisierbaren Elemente durch das Magnetfeld des magnetischen Objekts bewirkt werden. Die dadurch bewirkte Änderung der Impedanz der planaren Spule kann mittels des Prozessors erfasst werden. Beispielsweise beträgt die Änderung der Impedanz der planaren Spule durch die zumindest teilweise magnetische Sättigung der magnetisierbaren Elemente 5%, 10%, 15%, 20%, 25%, 30%, 35%, 40%, 45%, 50%, 55% oder 60%. Hierbei kann die Änderung der Impedanz der planaren Spule durch die zumindest teilweise Magnetisierung der magnetisierbaren Elemente abhängig von der Position des magnetischen Objekts, insbesondere abhängig von dem Abstand des magnetischen Objekts zu den magnetisierbaren Elementen sein.

Dadurch kann eine Bestimmung der Position des magnetischen Objekts mittels der Kalibrierungsdaten ermöglicht werden. Beispielsweise ist hierzu in den Kalibrierungsdaten einer Impedanz der planaren Spule eine Position des magnetischen Objekts zugeordnet.

In einer vorteilhaften Ausführungsform ist die Anzahl der verteilten magnetisierbaren Elemente zwischen der planaren Spule und dem magnetischen Objekt angeordnet. Dadurch wird der Vorteil erreicht, dass die magnetisierbaren Elemente effizient magnetisiert werden können

In einer weiteren vorteilhaften Ausführungsform weist die planare Spule eine Mäanderform, eine Rechteckform, eine Trapezform oder eine Dreiecksform auf. Dadurch wird der Vorteil erreicht, dass eine effiziente planare Spule verwendet werden kann.

In einer weiteren vorteilhaften Ausführungsform ist die planare Spule auf einer Leiterplatte angeordnet. Dadurch wird der Vorteil erreicht, dass die planare Spule besonders kostengünstig hergestellt werden kann.

Ferner können die auf der Leiterplatte angeordnete planare Spule und die Anzahl der verteilten magnetisierbaren Elemente ein Grundelement bilden oder in einem Grundelement umfasst sein.

In einer weiteren vorteilhaften Ausführungsform ist die Anzahl der verteilten magnetisierbaren Elemente an der Leiterplatte angeordnet, insbesondere verlötet oder verklebt. Dadurch wird der Vorteil erreicht, dass die magnetisierbaren Elemente effizient an der planaren Spule mechanisch fixiert werden kann.

In einer weiteren vorteilhaften Ausführungsform ist der Prozessor zum Erfassen eines Wirkwiderstandes oder eines Blindwiderstandes der planaren Spule ausgebildet. Dadurch wird der Vorteil erreicht, dass die Impedanz effizient erfasst werden kann.

In einer weiteren vorteilhaften Ausführungsform umfassen die Anzahl der verteilten magnetisierbaren Elemente einen ferromagnetischen Anteil. Dadurch wird der Vorteil erreicht, dass die magnetisierbaren Elemente effizient magnetisiert werden kann.

Ferner kann die Anzahl der verteilten magnetisierbaren Elemente einen ferromagnetischen Anteil und/oder einen paramagnetischen Anteil umfassen. Aufgrund der hohen magnetischen Permeabilität von Ferromagneten umfassen die magnetisierbaren Elemente vorzugsweise einen ferromagnetischen Anteil.

In einer weiteren vorteilhaften Ausführungsform umfasst die Anzahl der verteilten magnetisierbaren Elemente Ferrit, Stahl, Transformatorenblech oder eine hochpermeable Legierung. Dadurch wird der Vorteil erreicht, dass die magnetisierbaren Elemente besonders kostengünstig hergestellt werden können. Beispielsweise ist die hochpermeable Legierung eine Eisenlegierung, eine Nickellegierung oder eine Cobaltlegierung.

In einer weiteren vorteilhaften Ausführungsform weisen die magnetisierbaren Elemente eine Rechteckform, eine Trapezform oder eine Dreiecksform auf. Dadurch wird der Vorteil erreicht, dass die magnetisierbaren Elemente durch ein besonders kostengünstiges Stanzteil gebildet werden können.

In einer weiteren vorteilhaften Ausführungsform ist der Positionssensor ausgebildet mit einem Isolationselement, welches zwischen der planaren Spule und der Anzahl der verteilten magnetisierbaren Elemente angeordnet ist, um die planare Spule und die magnetisierbaren Elemente elektrisch voneinander zu isolieren. Dadurch wird der Vorteil erreicht, dass die magnetisierbaren Elemente besonders nahe an der planaren Spule angeordnet werden können, um eine Erfassungsgenauigkeit des Positionssensors zu erhöhen.

In einer weiteren vorteilhaften Ausführungsform nimmt ein Abstand zweier benachbarter magnetisierbarer Elemente der Anzahl der verteilten magnetisierbaren Elemente entlang der Reihe zu oder ab. Dadurch wird der Vorteil erreicht, dass eine Bewegung des magnetischen Objekts in Richtung der Reihe effizient erfasst werden kann.

Beispielsweise beträgt die Anzahl 2, 3, 4, 5, 6, 7, 8, 9 oder 10. Ferner können die magnetisierbaren Elemente der Anzahl der verteilten magnetisierbaren Elemente jeweils voneinander beabstandet angeordnet sein.

Ferner können die magnetisierbaren Elemente der Anzahl der verteilten magnetisierbaren Elemente strukturiert, insbesondere in Form eines Musters, angeordnet sein. Beispielsweise ist das Muster ein Schachbrettmuster oder ein zweidimensionales, insbesondere ein schiefwinkliges, ein rechtwinkliges, ein zentriert-rechteckiges, ein hexagonales oder ein quadratisches, Bravais-Gitter.

In einer weiteren vorteilhaften Ausführungsform ist der Positionssensor ausgebildet mit einer ersten Anzahl von verteilten magnetisierbaren Elementen, welche in einer ersten Reihe an der planaren Spule angeordnet ist, und einer zweiten Anzahl von verteilten magnetisierbaren Elementen, welche in einer zweiten Reihe an der planaren Spule angeordnet ist, wobei die erste Reihe relativ zu der zweiten Reihe verschoben ist. Dadurch wird der Vorteil erreicht, dass in den magnetisierbaren Elementen induzierte Wirbelströme reduziert werden können.

In einer weiteren vorteilhaften Ausführungsform ist der Positionssensor ausgebildet mit einer Anzahl von verteilten magnetisierbaren Elementen, welche in Reihe an der planaren Spule angeordnet ist, wobei eine Länge oder eine Breite der magnetisierbaren Elemente der Anzahl der verteilten magnetisierbaren Elemente entlang der Reihe zunimmt oder abnimmt. Dadurch wird der Vorteil erreicht, dass eine Genauigkeit der Erfassung der Position des magnetischen Objekts erhöht werden kann.

Beispielsweise beträgt die Anzahl 2, 3, 4, 5, 6, 7, 8, 9 oder 10. Ferner können die magnetisierbaren Elemente der Anzahl der verteilten magnetisierbaren Elemente jeweils voneinander beabstandet angeordnet sein.

Erfindungsgemäß ist der Positionssensor ausgebildet mit einer Anzahl von verteilten magnetisierbaren Elementen, welche in Reihe an der planaren Spule angeordnet ist, wobei die magnetisierbaren Elemente der Anzahl der verteilten magnetisierbaren Elemente mittels eines Steges mechanisch miteinander verbunden sind. Dadurch wird der Vorteil erreicht, dass eine Vibrationsfestigkeit des Positionssensors erhöht werden kann.

Beispielsweise beträgt die Anzahl 2, 3, 4, 5, 6, 7, 8, 9 oder 10. Ferner können die magnetisierbaren Elemente der Anzahl der verteilten magnetisierbaren Elemente jeweils voneinander beabstandet angeordnet sein. Die Anzahl der verteilten magnetisierbaren Elemente, wobei die magnetisierbaren Elemente der Anzahl der verteilten magnetisierbaren Elemente mittels eines Steges mechanisch miteinander verbunden sind, kann ferner durch Ausstanzen der Freiräume zwischen den verteilten magnetisierbaren Elementen aus einem Werkstück, wie einem Transformatorenblech, gefertigt werden.

In einer weiteren vorteilhaften Ausführungsform ist der Positionssensor ausgebildet mit einer Anzahl von verteilten magnetisierbaren Elementen, welche in Reihe an der planaren Spule angeordnet ist, wobei die Anzahl der verteilten magnetisierbaren Elemente auf einer Trägerfolie angeordnet ist. Dadurch wird der Vorteil erreicht, dass der Positionssensor besonders kostengünstig hergestellt werden kann.

Beispielsweise beträgt die Anzahl 2, 3, 4, 5, 6, 7, 8, 9 oder 10. Ferner können die magnetisierbaren Elemente der Anzahl der verteilten magnetisierbaren Elemente jeweils voneinander beabstandet angeordnet sein.

In einer weiteren vorteilhaften Ausführungsform ist der Prozessor ferner zum Bestimmen der Position des magnetischen Objekts in Abhängigkeit von einem Wirbelstromverlustwert der planaren Spule ausgebildet. Dadurch wird der Vorteil erreicht, dass eine Genauigkeit des Erfassens der Position des magnetischen Objekts erhöht werden kann.

Ausführungsbeispiele der Erfindung sind in den Zeichnungen dargestellt und werden im Folgenden näher beschrieben.

Es zeigen:

Fig. 1 eine schematische Darstellung eines Positionssensors zum Erfassen einer Position eines magnetischen Objekts gemäß einer nicht zur Erfindung gehörenden Ausführungsform;

Fig. 2 eine Schnittansicht eines nicht zur Erfindung gehörenden Grundelements zum Erfassen der Position des magnetischen Objekts;

Fig. 3 eine Aufsicht auf ein nicht zur Erfindung gehörendes Grundelement zum Erfassen der Position des magnetischen Objekts gemäß einer Ausführungsform; und

Fig. 4 eine Aufsicht auf ein Grundelement zum Erfassen der Position des magnetischen Objekts gemäß der Erfindung.

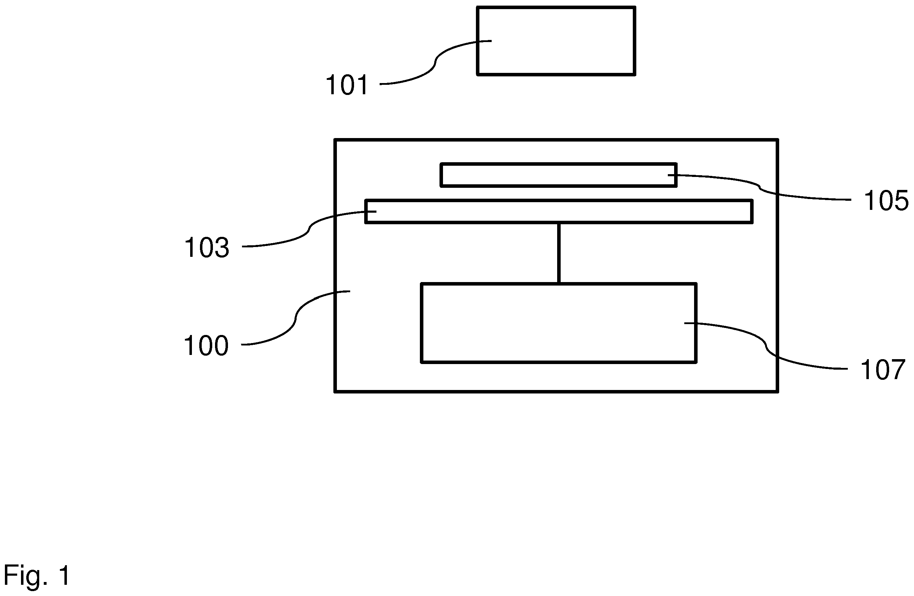

Fig. 1 zeigt eine schematische Darstellung eines nicht zur Erfindung gehörenden Positionssensors 100 zum Erfassen einer Position eines magnetischen Objekts 101 gemäß einer Ausführungsform. Der Positionssensor 100 umfasst eine planare Spule 103, ein magnetisierbares Element 105, welches die planare Spule 103 teilweise abdeckt, und einen Prozessor 107.

Der Positionssensor 100 zum Erfassen der Position des magnetischen Objekts 101 kann ausgebildet sein mit: der planaren Spule 103; dem magnetisierbaren Element 105, welches die planare Spule 103 zumindest teilweise abdeckt und mittels des magnetischen Objektes 101 magnetisierbar ist, wodurch eine Impedanz der planaren Spule 103 veränderbar ist; und dem Prozessor 107 zum Bestimmen der Position des magnetischen Objekts 101 in Abhängigkeit von der Impedanz der planaren Spule 103.

Das magnetische Objekt 101 kann in einen Kolben integriert sein, welcher ein Element einer Bremsanlage ist. Beispielsweise ist der Kolben in einem Tandemhauptzylinder der Bremsanlage aufgenommen und mit einem Bremspedal verbunden. Hierbei kann durch das Erfassen der Position des magnetischen Objekts 101 die Position des Kolbens bestimmt werden. Ferner kann in Abhängigkeit von der erfassten Position des magnetischen Objekts 101 ein durch das magnetische Objekt 101 zurückgelegter Weg, wie ein Pedalweg des Bremspedals, eine Bewegungsrichtung, insbesondere ein Winkel einer Bewegung, des magnetischen Objekts 101, eine Geschwindigkeit des magnetischen Objekts 101 und/oder eine Beschleunigung des magnetischen Objekts 101 bestimmt werden, beispielsweise mittels des Prozessors 107. Ferner kann der Positionssensor 100 ein Auslöseelement eines Bremslichtschalters bilden oder in einer Bremslichtsteuerung umfasst sein.

Die planare Spule 103 kann auf einer Leiterplatte angeordnet sein. Beispielsweise weist die Leiterplatte eine Kupferbeschichtung auf, aus welcher die planare Spule 103 durch einen Ätzprozess gebildet wurde. Ferner kann die planare Spule 103 eine Mäanderform, eine Rechteckform, eine Trapezform oder eine Dreiecksform aufweisen. Hierbei kann die planare Spule 103 abgerundete Ecken aufweisen.

Das magnetisierbare Element 105 kann ein flächiges ferromagnetisches Element umfassen. Ferner kann das magnetisierbare Element 105 an der planaren Spule 103, insbesondere zwischen der planaren Spule 103 und dem magnetischen Objekt 101, angeordnet sein kann. Die planare Spule 103 kann ferner zwischen dem magnetisierbaren Element 105 und dem magnetischen Objekt 101 angeordnet sein. Ferner kann das magnetisierbare Element 105 die planare Spule 103 zumindest teilweise umgeben. Der Positionssensor 100 kann ein weiteres magnetisierbares Element umfassen, wobei die planare Spule 103 zwischen dem magnetisierbaren Element 105 und dem weiteren magnetisierbaren Element angeordnet ist. Ferner kann das magnetisierbare Element 105 und/oder das weitere magnetisierbare Element mit der Leiterplatte, auf welcher die planare Spule 103 angeordnet ist, verlötet und/oder verklebt sein.

Der Prozessor 107 kann zum Erfassen eines Wirkwiderstandes und/oder eines Blindwiderstandes der planaren Spule 103 ausgebildet sein. Der Prozessor 107 kann ferner eine Einrichtung zum Erfassen des Wirkwiderstands und/oder des Blindwiderstands der planaren Spule 103, eine Maxwell-Brückenschaltung und/oder eine Maxwell-Wien-Brückenschaltung umfassen. Ferner kann der Prozessor 107 einen Kondensator umfassen und ausgebildet sein, eine Resonanzfrequenz eines durch die planare Spule 103 und den Kondensator gebildeten Schwingkreises zu erfassen und die Impedanz der planaren Spule 103 in Abhängigkeit von der Resonanzfrequenz und einer Kapazität des Kondensators zu bestimmen.

Beispielsweise wird die Impedanz der planaren Spule 103 gemäß den folgenden Formeln bestimmt:

$$Z = R + jX;$$

$$X = \omega L;$$

und

$$\omega = 2\pi f;$$

wobei Z die Impedanz der planaren Spule 103, R den erfassten Wirkwiderstand der planaren Spule 103, X den erfassten Blindwiderstand, wie die erfasste Reaktanz, der planaren Spule 103, ω eine Kreisfrequenz und f eine Frequenz bezeichnet. Hierbei ist die Impedanz der planaren Spule 103 eine komplexe Größe.

Es kann sowohl der Blindwiderstand der planaren Spule 103 als auch der Wirkwiderstand der planaren Spule 103 von der Position des magnetischen Objekts 101 abhängen, da alle Verluste, beispielsweise durch Wirbelstrom, zu dem Wirkwiderstand der planaren Spule 103 beitragen können, nicht nur der Gleichstromwiderstand der planaren Spule 103. Ferner kann die Induktivität der planaren Spule 103 aus der Impedanz der planaren Spule 103 bestimmt werden, weshalb das Erfassen der Impedanz der planaren Spule 103 häufig als Induktivitätsmessung bezeichnet wird.

Der Prozessor 107 kann ferner einen Mikrokontroller umfassen oder durch einen Mikrokontroller gebildet sein. Ferner kann der Positionssensor 100 einen Speicher umfassen, in welchem Kalibrierungsdaten, insbesondere in Form einer Lookup-Tabelle, vorgespeichert sind. Der Prozessor 107 kann ferner zur Bestimmung der Position des magnetischen Objekts 101 auf der Basis der Impedanz und der Kalibrierungsdaten ausgebildet sein.

Das magnetisierbare Element 105 kann einen Spulenkern der planaren Spule 103 bilden. Daher kann durch eine Änderung der magnetischen Eigenschaften des magnetisierbaren Elements 105 eine Änderung der Impedanz der planaren Spule 103 bewirkt werden. Befindet sich das magnetische Objekt 101 nahe an dem magnetisierbaren Element 105, so kann eine zumindest teilweise magnetische Sättigung des magnetisierbaren Elements 105 durch das Magnetfeld des magnetischen Objekts 101 bewirkt werden. Die dadurch bewirkte Änderung der Impedanz der planaren Spule 103 kann mittels des Prozessors 107 erfasst werden. Beispielsweise beträgt die Änderung der Impedanz der planaren Spule 103 durch die zumindest teilweise magnetische Sättigung des magnetisierbaren Elements 105 5%, 10%, 15%, 20%, 25%, 30%, 35%, 40%, 45%, 50%, 55% oder 60%. Hierbei kann die Änderung der Impedanz der planaren Spule 103 durch die zumindest teilweise Magnetisierung des magnetisierbaren Elements 105 abhängig von der Position des magnetischen Objekts 101, insbesondere abhängig von dem Abstand des magnetischen Objekts 101 zu dem magnetisierbaren Element 105, sein. Dadurch kann eine Bestimmung der Position des magnetischen Objekts 101 mittels der Kalibrierungsdaten ermöglicht werden. Beispielsweise ist hierzu in den Kalibrierungsdaten einer Impedanz der planaren Spule 103 eine Position des magnetischen Objekts 101 zugeordnet.

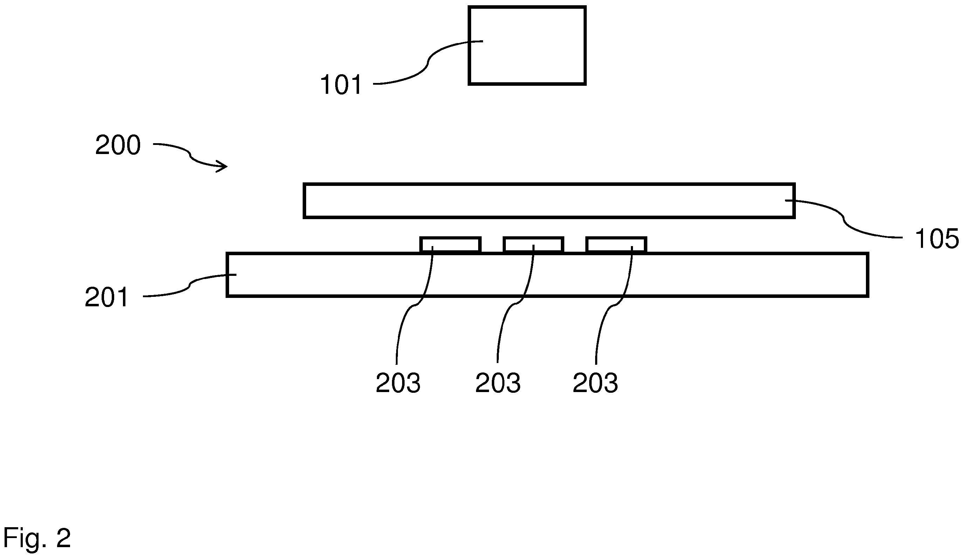

Fig. 2 zeigt eine Schnittansicht eines nicht zur Erfindung gehörenden Grundelements 200 zum Erfassen der Position des magnetischen Objekts 101. Das Grundelement 200 umfasst eine Leiterplatte 201 mit Leiterbahnen 203, welche eine planare Spule 103 bilden, und ein magnetisierbares Element 105.

Die planare Spulen 103 ist auf der Leiterplatte 201 angeordnet. Hierdurch kann ein Kostenvorteil gegenüber gewickelten Spulen erreicht werden, sofern die Windungszahl der planaren Spule 103 klein ist. Ferner können bei einem Herstellungsprozess der planaren Spulen 103 geringe geometrische Toleranzen erreicht werden, was bei Sensorspulen besonders vorteilhaft ist.

Die Grundfunktion des Positionssensors 100, oder eines Winkelsensors, kann dadurch erzeugt werden, dass

1. mehrere Grundelemente 200, insbesondere auf einer weiteren Leiterplatte, nebeneinander und/oder in verschiedenen Leiterlagen angeordnet werden und/oder

2. das Layout des Grundelements 200 oder der Grundelemente 200 an den Weg des magnetischen Objekts 101, wie eines Magneten, angepasst wird, beispielsweise lang gestreckt oder kompakt, gerade oder gekrümmt, eckig oder rund, und/oder

3. die Überdeckung der einzelnen Bestandteile des Grundelements 200 variiert wird, und/oder

4. mehrere Grundelemente 200 durch Reihen- und/oder Parallelschaltung zu einer einzigen Induktivität im elektrischen Sinne zusammengefasst werden und/oder

5. mehrere solcher durch Reihen- und/oder Parallelschaltung entstandener oder elementarer Induktivitäten einzeln gemessen werden, wobei die Positions- oder Winkelinformation sich aus rechnerischer Kombination der einzelnen Messergebnisse ergibt.

Es kann eine Mehrzahl von Grundelementen 200 zusammengeführt werden, um ein zusammengesetztes Grundelement zu bilden.

In Fig. 2 ist das Grundelement 200 im Schnitt zu sehen, welches das magnetisierbare Element 105, wie einen ferromagnetischen Körper, die Leiterplatte 201 und darauf platzierten Leiterbahnen 203, welche die planare Spule 103 bilden oder formen, umfasst. Es kann die Leiterplatte 201 durch einen Träger und das magnetisierbare Element 105 durch einen ferromagnetischen und/oder flussleitenden Körper gebildet sein.

Über dem Grundelement 200 ist das magnetische Objekt 101, wie ein Positionsmagnet, abgebildet, welches jedoch gedanklich nicht zum Grundelement 200 gehört, da im Regelfall viele Grundelemente 200 nur einem magnetischen Objekt 101, wie einem Magneten, gegenüberstehen, wenngleich Anordnungen, die mehrere magnetische Objekte 101 oder Magnete beinhalten, ebenfalls möglich sind.

Die Funktionsweise ist folgendermaßen: Die Leiterbahnen 203 erzeugen in ihrer Umgebung einen magnetischen Fluss, dessen Verlauf vom Verlauf der Leiterbahnen 203 abhängt. Das magnetisierbare Element 105, wie ein ferromagnetischer Körper, kann derart angeordnet und geformt sein, dass es sich zumindest teilweise im Bereich dieses magnetischen Flusses befindet. Dadurch kann der magnetische Fluss überwiegend durch das magnetisierbare Element 105, wie einen ferromagnetischen Körper, geführt werden. Hierbei kann eine Induktivität der planaren Spule 103 höher sein als ohne das magnetisierbare Element 105, wie den ferromagnetischen Körper. Der Einfluss des magnetisierbarene Elements 105, wie des ferromagnetischen Körpers, auf die Induktivität der planaren Spule 103 kann von seiner Form, Anordnung und Permeabilität abhängen. Im vorliegenden Fall ist das magnetisierbare Element 105 oder der ferromagnetische Körper fest an der Leiterplatte 201 und damit der planaren Spule 103 montiert und bewegt sich relativ zu diesen nicht. Stattdessen bewegt sich das magnetische Objekt 101 oder der Magnet und führt ebenfalls Fluss durch das magnetisierbare Element 105, wie den ferromagnetischen Körper. Dieses wird dadurch ganz oder teilweise gesättigt, wodurch seine Permeabilität und damit seine Fähigkeit, den Fluss der planaren Spule 103 zu leiten, sinken kann. Dies kann als Änderung der Induktivität der planaren Spule 103 gemessen werden.

Durch eine planare Anordnung des Grundelements 200 kann eine Kostenreduzierung erreicht werden. Die Leiterbahnen 203 können in einer oder mehreren parallelen Schichten verlaufen und in einem planaren Träger, wie der Leiterplatte 201, integriert sein. Das magnetisierbare Element 105, wie ein ferromagnetischer Körper, kann als Blech oder Folie ausgeführt werden, welches oder welche beispielsweise durch Löten oder Kleben planparallel zu der Leiterplatte 201 auf dieser befestigt werden kann. Das magnetisierbare Element 105, wie ein ferromagnetischer Körper, kann eine geometrische Struktur aufweisen, die aus einzelnen Teilen für die Grundelemente 200 aus Fig. 2 kombiniert ist. Diese Struktur wird beispielsweise durch Stanzen oder Ätzen erzeugt. Dabei wird bevorzugt so vorgegangen, dass diese Kombination nur ein Bauteil ergibt, alle für die Grundelemente 200 aus Fig. 2 benötigten Teile also zusammenhängend sind, wodurch die Montage vereinfacht werden kann, weil nur ein Bauteil platziert wird und die relative Lage der Teile durch den Strukturierungsprozess bereits bestimmt sein kann. Dabei können zwischen den einzelnen Teilen Stege stehen bleiben, die so dünn ausgeführt werden können, dass sie nur wenig magnetischen Fluss leiten und daher die Funktion, beispielsweise des Grundelements 200, durch die Stege nur geringfügig beeinflusst wird. Gemäß einer Ausführungsform kann eine nicht-ferromagnetischen Trägerfolie verwendet werden, die die Teile zueinander fixiert, obwohl keine Stege vorhanden sind.

Für die Funktion des Positionssensors 100 kann auch die elektrische Leitfähigkeit des Materials von Bedeutung sein. Ist das Material des magnetisierbaren Elements 105, wie eines ferromagnetischen Körpers, leitfähig, kann dort auch ein Wirbelstrom fließen. Dieser Wirbelstrom kann das Feld der planaren Spule 103, wie der Messspulen, abschwächen und ist daher unerwünscht. Es kann jedoch experimentell nachgewiesen werden, dass selbst mit einfachem Walzstahl als magnetisierbares Element 105, wie als ferromagnetischem Körper, gute Ergebnisse erzielt werden können. Hierbei kann der gewünschte Effekt den unerwünschten Effekt übersteigen. Zur Steigerung der Leistungsfähigkeit können andere Stoffe eingesetzt werden, wodurch möglicherweise die Produktionskosten des Positionssensors 100 erhöht sein können. Zunächst kann Transformatorenblech in Frage kommen, welches unter den Stählen durch sein einlegiertes Silizium eine besonders geringe Leitfähigkeit aufweist. Weiterhin können sich amorphe und nanokristalline magnetische Funktionswerkstoffe eignen, die besonders hohe Permeabilitäten aufweisen.

Auch Folien, bei denen auf oder in einen Kunststoffträger Ferrit eingebettet wird, können einen sensorischen Effekt zeigen. Aufgrund der geringen effektiven Permeabilität solcher Folien kann dieser jedoch geringer als bei den vorgenannten Werkstoffen sein. Ein idealer Werkstoff hinsichtlich der magnetischen Eigenschaften kann durch weichmagnetisches, gesintertes Ferrit gegeben sein. Da das Material jedoch bevorzugt als dünne Schicht vorliegt und die Fertigungstechnik besonders vorteilhaft mit einem ausgedehnten Bauteil sein kann, kann durch die Sprödigkeit dieser Werkstoffe die Verarbeitung erschwert sein, insbesondere durch Bruchgefahr. Gegebenenfalls kann die Kombination von Trägerfolie und kleinen Ferritkörpern attraktiv sein, jedoch können sich auch dann fertigungstechnische Herausforderungen stellen, die bei Stahl möglicherweise nicht vorhanden sind.

Das magnetisierbare Element 105, wie ein ferromagnetischer Körper, kann bevorzugt sehr dünn ausgeführt sein, damit er von dem magnetischen Objekt 101, wie von einem Magneten, auch effektiv gesättigt werden kann oder kein allzu großes magnetisches Objekt 101, wie kein allzu großer Magnet, erforderlich ist oder der Abstand zwischen dem Positionssensor 100 und dem magnetischem Objekt 101, wie dem Magnet, nicht zu gering ausfällt. Dünn kann hier bedeuten, dass gute Ergebnisse mit einer Walzstahlfolie mit einer Stärke von 0,025mm erreicht werden können. Weiterhin kann bei einer dünnen Folie aus Stahl vorteilhaft sein, dass die in der Ebene der Folie fließenden Wirbelströme geringer ausfallen als bei einer dicken Schicht.

Gegenüber dem bekannten LIPS kann der Positionssensor 100 ferner den weiteren Kostenvorteil aufweisen, dass eine transformatorische Messung durch eine Messung der Induktivität der planaren Spule 103 ersetzt wird. Es kann daher eine Wicklung, wie eine Primärspule, für die Anregung des LIPS-Systems wegfallen. Weiterhin kann eine Redundanz verbessert werden, denn jeder Messkanal ist nun unabhängig, während bei einem LIPS-System ein Ausfall einer Primärspule zu einem kompletten Ausfall des LIPS-Systems führen kann.

Hinsichtlich des Wirbelstroms kann festgestellt werden, dass der Positionssensor 100 nicht nur eine Kennlinie in der Induktivität aufweisen kann, sondern auch eine Kennlinie, wie eine Abhängigkeit der Messgröße, in den Verlusten durch Wirbelstrom. Daher kann die Messung der Verluste ebenfalls zur Bestimmung der Messgröße Position oder Winkel herangezogen werden. Eine gezielte Erzeugung einer derartigen Kennlinie kann jedoch durch eine Optimierung der gesamten Anordnung auf eine möglichst gute Kennlinie in der Induktivität erschwert werden. Dennoch können sich durch die zusätzliche Messung der Wirbelstromverluste Verbesserungen ergeben. Wird ein Prozessor 107 verwendet, der neben der Impedanz auch die Wirbelstromverluste erfassen kann, kann für jede einzelne Anordnung zumindest nach einer Optimierung geprüft werden, ob verwertbare Ergebnisse erzielt werden können.

Es kann auf beiden Seiten der Leiterplatte 201 und damit der planaren Spule 103 ein magnetisierbares Element 105, wie ein ferromagnetisches Teil, angeordnet sein. Durch Verwendung von magnetisierbaren Elementen 105, wie ferromagnetischen Teilen, in zwei Ebenen, über und unter der Leiterplatte 201, kann der sensorische Effekt verstärkt werden. Dabei kann auf beiden Seiten das gleiche Layout zum Einsatz kommen. Ferner können unterschiedliche Layouts zum Einsatz kommen.

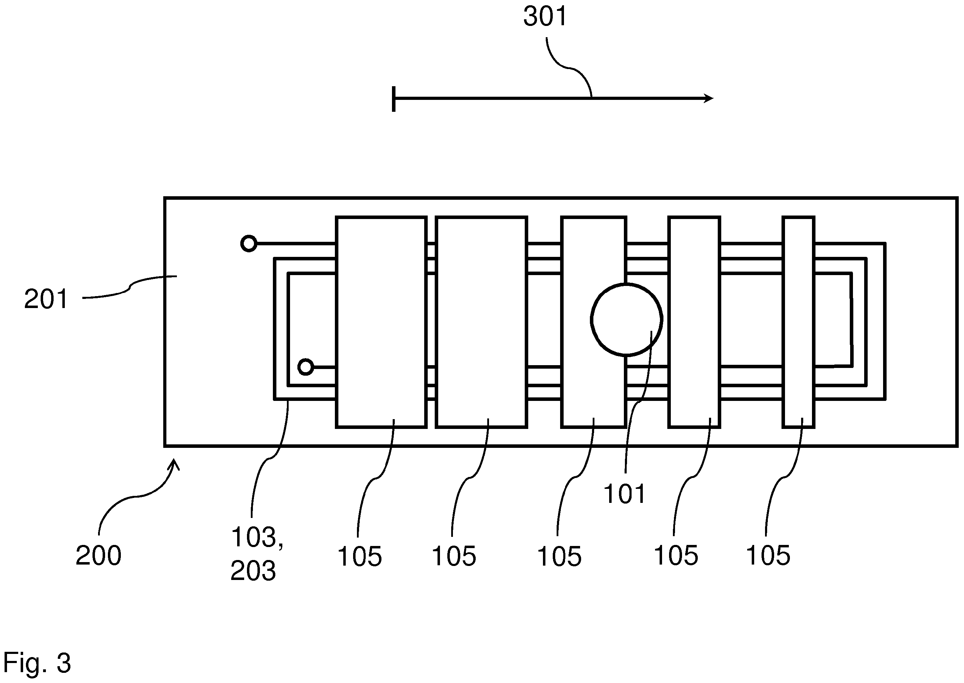

Fig. 3 zeigt eine Aufsicht auf ein nicht zur Erfindung gehörendes Grundelement 200 zum Erfassen der Position des magnetischen Objekts 101. Das Grundelement 200 umfasst die Leiterplatte 201 mit der Leiterbahn 203, welche die planare Spule 103 bildet, und eine Mehrzahl von magnetisierbaren Elementen 105. Ferner ist eine Strecke 301 abgebildet.

Die Position des magnetischen Objekts 101, wie eines Magneten, entlang der Strecke 301, wie einer Strecke s, kann gemessen werden. Dazu kann entlang der Strecke 301 eine planare Spule 103 aus der Leiterbahn 203 angeordnet werden, die sich auf der Leiterplatte 201 befindet. Die Mehrzahl der magnetisierbaren Elemente 105, wie ferromagnetische Elemente, sind über der planaren Spule 103 und der Leiterplatte 201 entlang der Strecke 301 verteilt. Die Anordnung und Abmessungen der Mehrzahl der magnetisierbaren Elemente 105 kann eine Abhängigkeit der Induktivität der planaren Spule 103, wie einer Induktivität L, von der Position des magnetischen Objekts 101, wie eines Magneten, entlang der Strecke 301 bewirken. Diese Funktion kann durch die ungleichmäßige Verteilung der Mehrzahl der magnetisierbaren Elemente 105 entlang der Strecke 301 zustande kommen. Obwohl das Layout der planaren Spule 103 entlang der Strecke 301 keine Variation in Anzahl und Geometrie der Leiterbahn 203 aufweist, kann durch die Mehrzahl der magnetisierbaren Elemente 105 der Induktivitätsbelag der planaren Spule 103 dL(s) abhängig von der Strecke 301 sein, wobei L die Induktivität der planaren Spule 103 bezeichnet und die Strecke 301 durch den Parameter s parametriert wird. An Orten entlang der Strecke 301, an denen das jeweilige magnetisierbare Element 105 breit ist und einen geringen Abstand zu den jeweiligen benachbarte magnetisierbaren Elementen 105 aufweist, kann dL(s) hoch sein, im umgekehrten Fall gering. Somit können Anteile der planaren Spule 103 links der Bildmitte einen höheren Anteil an der Gesamtinduktivität L der planaren Spule 103 aufweisen. Wird das magnetische Objekt 101, wie ein Magnet entfernt, kann die maximale Induktivität L der planaren Spule 103 erreicht werden. Befindet er sich rechts, kann durch die Sättigung der schmalen magnetisierbaren Elemente 105 auch nur ein kleiner Einfluss auf die Induktivität L der planaren Spule 103 ausgeübt werden. Befindet er sich links, kann die Sättigung der breiten magnetisierbaren Elemente 105 dagegen einen großen Einfluss auf die Induktivität L der planaren Spule 103 verursachen.

Es kann eine kontinuierliche, monotone und möglichst lineare Kennlinie angestrebt werden. Die Verwendung einzelner, diskreter magnetisierbarer Elemente 105 zur Erzeugung dieser Kennlinie kann daher bevorzugt nicht zu grob gewählt werden. Je größer der Abstand des magnetischen Objekts 101, wie eines Magneten, desto höher ist die Reichweite seines Feldes im Sinne einer Sättigung der Mehrzahl der magnetisierbaren Elemente 105 entlang der durch den Parameter s parametrierten Strecke 301. Die Mehrzahl der magnetisierbaren Elemente 105 kann so gestaltet sein, dass sich immer mehrere im Sättigungsbereich befinden, damit die Bedingungen für eine angestrebte Kennlinie erfüllt werden. Je mehr magnetisierbare Elemente 105 dazu verwendet werden, desto besser. Ein vorteilhaftes Design kann daher von den minimalen im Fertigungsprozess der Mehrzahl der magnetisierbaren Elemente 105 verfügbaren Stegbreiten und Abständen regen Gebrauch machen. Dadurch können außerdem Wirbelströme reduziert werden.

Die Richtung des Flusses der planaren Spule 103 in den magnetisierbaren Elementen 105 kann von der horizontalen Mittelachse nach oben und unten oder umgekehrt verlaufen.

Die Verwendung von magnetisierbaren Elementen 105 unterschiedlicher Breite und Abständen stellt nur eine Möglichkeit dar, das eigentliche Ziel, eine Ortsabhängigkeit des Induktivitätsbelages der planaren Spule 103 dL(s) zu erhalten. Es kann auch die Länge der magnetisierbaren Elemente 105 variiert werden, um eine unterschiedlich starke Flussleitung zu erreichen. Es kann die planare Spule 103 dreieckig ausgeführt werden, beispielsweise rechts im Bereich von hohen Werten für den Parameter s der Strecke 301 spitz zulaufend.

Es kann unter jedem magnetisierbaren Element 105 eine planare Spule 103 oder eine eigene Windung vorgesehen werden, wobei die planaren Spulen 103 oder die Windungen unterschiedliche Windungszahlen haben und dann in Reihe geschaltet werden können. Planare Spulen 103 oder Windungen in verschiedenen Layern können überlappend ausgebildet sein, oder eine planare Spule 103 oder eine Windung könnte alle magnetisierbaren Elemente 105 umfassen, die nächste alle bis auf eines am Rand, bis die letzte planare Spule 103 oder Windung nur noch das magnetisierbare Element 105 am anderen Rand umfasst.

Es kann eine kontinuierliche Variation einer Eigenschaft der Mehrzahl der magnetisierbaren Elemente 105 entlang der Strecke 301 vorgesehen werden. Beispielsweise kann anstelle einer Änderung der Länge der magnetisierbaren Elemente 105 die Mehrzahl der magnetisierbaren Elemente 105 miteinander verschmolzen werden. Hierbei sind keine Abstände mehr vorzusehen. Hierbei kann beachtet werden, dass

    1. durch den großen, ausgedehnten, leitfähigen Körper des verschmolzenen magnetisierbaren Elements 105 ein besonders hoher Wirbelstrom fließen kann; und/oder

    2. eine Sättigung des magnetisierbaren Elements 105 weniger lokalisiert sein kann, weil die Flussleitung im ausgedehnten, beispielsweise ferromagnetischen, Körper des magnetisierbaren Elements 105 weniger beschränkt auf die nahe Umgebung des magnetischen Objekts 101 oder eines Magneten bleibt. Stattdessen kann ein Teil des Flusses des magnetischen Objekts, wie eines Magneten, über weite Strecken im Körper des magnetisierbaren Elements 105 geleitet werden und auch Bereiche sättigen, die weit von dem magnetischen Objekt 101, wie von einem Magneten, entfernt sind. Diese Eigenschaft kann eine deutliche Abgrenzung zu einem LIPS-System darstellen: Während dieses eine Flussleitung in Messrichtung voraussetzen kann, kann hier eine solche Leitung unerwünscht sein.

Fig. 4 zeigt eine Aufsicht auf ein erfindungsgemäßes Grundelement 200 zum Erfassen der Position des magnetischen Objekts 101 . Das Grundelement 200 umfasst die Leiterplatte 201 mit der Leiterbahn 203, welche die planare Spule 103 bildet, und die Mehrzahl der magnetisierbaren Elemente 105, welche über Stege 401 mechanisch miteinander verbunden sind. Ferner ist die Strecke 301 abgebildet.

In Fig. 4 ist gezeigt, wie die Kombination der Mehrzahl der magnetisierbaren Elemente 105 zu einem Bauteil erfolgen kann, ohne dass Nachteile auftreten. Im Unterschied zu dem in der Fig. 3 gezeigten Grundelement 200 erfolgt diese Kombination über die oberen und unteren Stege 401. Der Einfluss dieser Maßnahme auf die Kennlinie kann gering bleiben, weil in Richtung der Stege 401 kein nennenswerter Fluss der planaren Spule 103 verläuft. Daher spielt es keine Rolle, ob das magnetische Objekt 101 oder der Magnet die Stege 401 nennenswert sättigt oder nicht. Da die Stege 401 zudem dünn ausgeführt sind, kann bewirkt werden, dass der Fluss, der durch sie transportiert wird, keinen nennenswerten Einfluss auf den Sättigungszustand der Mehrzahl der magnetisierbaren Elemente 105 ausübt, die die Funktion des Positionssensors 100 tragen.

Die in Fig. 3 und 4 gezeigten Grundelemente 200 und andere Anordnungen zur Positions- und Winkelmessung können weiter in an sich bekannter Art kombiniert werden, um bessere Ergebnisse zu erzielen. Um beispielsweise differentielle und/oder ratiometrische Messungen zu ermöglichen, kann ein Grundelement 200 nach Fig. 3 mit einem gleichartigen Grundelement 200 kombiniert werden, bei dem die Anordnung entlang der vertikalen Mittellinie gespiegelt ist und das neben dem Grundelement 200 von Fig. 3 angeordnet oder platziert wird. Bezeichnet man die Signale dieser Grundelemente 200 oder Sensoren mit A und B, können die zur Unterdrückung von Störungen und Querempfindlichkeiten vorteilhaften Terme A-B, A/B und (A-B)/(A+B) gebildet werden, beispielsweise durch den Prozessor 107.

## Bezugszeichenliste

| | |
|---|---|
| 100 | Positionssensor |
| 101 | Magnetisches Objekt |
| 103 | Planare Spule |
| 105 | Magnetisierbares Element |
| 107 | Prozessor |
| 200 | Grundelement |
| 201 | Leiterplatte |
| 203 | Leiterbahn |
| 301 | Strecke |
| 401 | Steg |

## Patentansprüche

1. Positionssensor (100) zum Erfassen einer Position eines magnetischen Objekts (101), entlang eines Weges (301) , mit:

   einer planaren Spule (103);
   einer Anzahl von verteilten magnetisierbaren Elementen (105), welche die planare Spule (103) zumindest teilweise abdecken und mittels des magnetischen Objektes (101) magnetisierbar sind, wodurch eine Impedanz der planaren Spule (103) veränderbar ist, wobei die magnetisierbaren Elemente (105) der Anzahl der verteilten magnetisierbaren Elemente (105) entlang des Weges (301) in Reihe an der planaren Spule (103) angeordnet sind und mittels eines Steges (401) entlang des Weges (301) mechanisch miteinander verbunden sind; und
   einem Prozessor (107) zum Bestimmen der Position des magnetischen Objekts (101) in Abhängigkeit von der Impedanz der planaren Spule (103) .

2. Positionssensor (100) nach Anspruch 1, wobei die magnetisierbaren Elemente (105) zwischen der planaren Spule (103) und dem magnetischen Objekt (101) angeordnet sind.

3. Positionssensor (100) nach Anspruch 1 oder 2, wobei die planare Spule (103) eine Mäanderform, eine Rechteckform, eine Trapezform oder eine Dreiecksform aufweist.

4. Positionssensor (100) nach einem der vorangehenden Ansprüche, wobei die planare Spule (103) auf einer Leiterplatte (201) angeordnet ist.

5. Positionssensor (100) nach Anspruch 4, wobei die magnetisierbaren Elemente (105) an der Leiterplatte (201) angeordnet, insbesondere verlötet oder verklebt, sind

6. Positionssensor (100) nach einem der vorangehenden Ansprüche, wobei der Prozessor (107) zum Erfassen eines Wirkwiderstandes oder eines Blindwiderstandes der planaren Spule (103) ausgebildet ist.

7. Positionssensor (100) nach einem der vorangehenden Ansprüche, wobei die magnetisierbaren Elemente (105) einen ferromagnetischen Anteil umfassen .

8. Positionssensor (100) nach einem der vorangehenden Ansprüche, wobei die magnetisierbaren Elemente (105) Ferrit, Stahl, Transformatorenblech oder eine hochpermeable Legierung umfassen

9. Positionssensor (100) nach einem der vorangehenden Ansprüche, wobei die magnetisierbaren Elemente (105) eine Rechteckform, eine Trapezform oder eine Dreiecksform aufweisen

10. Positionssensor (100) nach einem der vorangehenden Ansprüche, mit einem Isolationselement, welches zwischen der planaren Spule (103) und den magnetisierbaren Elementen (105) angeordnet ist, um die planare Spule (103) und die magnetisierbaren Elemente (105) elektrisch voneinander zu isolieren.

11. Positionssensor (100) nach einem der vorangehenden Ansprüche, wobei ein Abstand zweier benachbarter magnetisierbarer Elemente (105) der Anzahl der verteilten magnetisierbaren Elemente (105) entlang der Reihe zunimmt oder abnimmt.

12. Positionssensor (100) nach einem der vorangehenden Ansprüche, wobei eine Länge oder eine Breite der magnetisierbaren Elemente (105) der Anzahl der verteilten magnetisierbaren Elemente (105) entlang der Reihe zunimmt oder abnimmt.

13. Positionssensor (100) nach einem der vorangehenden Ansprüche, wobei die Anzahl der verteilten magnetisierbaren Elemente (105) auf einer Trägerfolie angeordnet ist.

14. Positionssensor (100) nach einem der vorangehenden Ansprüche, wobei der Prozessor (107) ferner zum Bestimmen der Position des magnetischen Objekts (101) in Abhängigkeit von einem Wirbelstromverlustwert der planaren Spule (103) ausgebildet ist.

**Claims**

1. Position sensor (100) for detecting a position of a magnetic object (101) along a path (301), having:

   a planar coil (103);
   a number of distributed magnetizable elements (105) which at least partially cover the planar coil (103) and can be magnetized by means of the magnetic object (101), as a result of which an impedance of the planar coil (103) can be changed; the magnetizable elements (105) of the number of distributed magnetizable elements (105) being arranged in a row on the planar coil (103) along the path (301) and being mechanically connected to one another along the path (301) by means of a web (401); and
   a processor (107) for determining the position of the magnetic object (101) on the basis of the impedance of the planar coil (103).

2. Position sensor (100) according to Claim 1, the magnetizable elements (105) being arranged between the planar coil (103) and the magnetic object (101).

3. Position sensor (100) according to Claim 1 or 2, the planar coil (103) having a meandering shape, a rectangular shape, a trapezoidal shape or a triangular shape.

4. Position sensor (100) according to one of the preceding claims, the planar coil (103) being arranged on a printed circuit board (201).

5. Position sensor (100) according to Claim 4, the magnetizable elements (105) being arranged on the printed circuit board (201), in particular being soldered or adhesively bonded.

6. Position sensor (100) according to one of the preceding claims, the processor (107) being designed to detect a resistance or a reactance of the planar coil (103) .

7. Position sensor (100) according to one of the preceding claims, the magnetizable elements (105) comprising a ferromagnetic portion.

8. Position sensor (100) according to one of the preceding claims, the magnetizable elements (105) comprising ferrite, steel, transformer laminate or a highly permeable alloy.

9. Position sensor (100) according to one of the preceding claims, the magnetizable elements (105) having a rectangular shape, a trapezoidal shape or a triangular shape.

10. Position sensor (100) according to one of the preceding claims, having an insulation element which is arranged between the planar coil (103) and the magnetizable elements (105) in order to electrically insulate the planar coil (103) and the magnetizable elements (105) from one another.

11. Position sensor (100) according to one of the preceding claims, a distance between two adjacent magnetizable elements (105) of the number of distributed magnetizable elements (105) increasing or decreasing along the row.

12. Position sensor (100) according to one of the preceding claims, a length or a width of the magnetizable elements (105) of the number of distributed magnetizable elements (105) increasing or decreasing along the row.

13. Position sensor (100) according to one of the preceding claims, the number of distributed magnetizable elements (105) being arranged on a carrier film.

14. Position sensor (100) according to one of the preceding claims, the processor (107) also being designed to determine the position of the magnetic object (101) on the basis of an eddy current loss value of the planar coil (103).

**Revendications**

1. Capteur de position (100) destiné à détecter la position d'un objet magnétique (101) le long d'un trajet (301), ledit capteur de position comprenant :

    une bobine plane (103) ;
    un certain nombre d'éléments magnétisables répartis (105) qui recouvrent au moins partiellement la bobine plane (103) et qui peuvent être magnétisés au moyen de l'objet magnétique (101) de façon à pouvoir modifier l'impédance de la bobine plane (103), les éléments magnétisables (105) du nombre d'éléments magnétisables répartis (105) étant disposés en série sur la bobine plane (103) le long du trajet (301) et étant reliés mécaniquement les uns aux autres au moyen d'une nervure (401) le long du trajet (301) ; et
    un processeur (107) destiné à déterminer la position de l'objet magnétique (101) en fonction de l'impédance de la bobine plane (103).

2. Capteur de position (100) selon la revendication 1, les éléments magnétisables (105) étant disposés entre la bobine plane (103) et l'objet magnétique (101) .

3. Capteur de position (100) selon la revendication 1 ou 2, la bobine plane (103) ayant une forme de méandre, une forme rectangulaire, une forme trapézoïdale ou une forme triangulaire.

4. Capteur de position (100) selon l'une des revendications précédentes, la bobine plane (103) étant disposée sur une carte de circuit imprimé (201).

5. Capteur de position (100) selon la revendication 4, les éléments magnétisables (105) étant disposés, notamment soudés ou collés, sur la carte de circuit imprimé (201).

6. Capteur de position (100) selon l'une des revendications précédentes, le processeur (107) étant conçu pour détecter la résistance ou la réactance de la bobine plane (103).

7. Capteur de position (100) selon l'une des revendications précédentes, les éléments magnétisables (105) comprenant un composant ferromagnétique.

8. Capteur de position (100) selon l'une des revendications précédentes, les éléments magnétisables (105) comprenant de la ferrite, de l'acier, une tôle de transformateur ou un alliage hautement perméable.

9. Capteur de position (100) selon l'une des revendications précédentes, les éléments magnétisables (105) ayant une forme rectangulaire, une forme trapézoïdale ou une forme triangulaire.

10. Capteur de position (100) selon l'une des revendications précédentes, comprenant un élément d'isolation qui est disposé entre la bobine plane (103) et les éléments magnétisables (105) pour isoler électriquement la bobine plane (103) et les éléments magnétisables (105) les uns des autres.

11. Capteur de position (100) selon l'une des revendications précédentes, la distance entre deux éléments magnétisables adjacents (105) du nombre d'éléments magnétisables répartis (105) augmentant ou diminuant le long de la série.

12. Capteur de position (100) selon l'une des revendications précédentes, la longueur ou la largeur des éléments magnétisables (105) du nombre d'éléments magnétisables répartis (105) augmentant ou diminuant le long de la série.

13. Capteur de position (100) selon l'une des revendications précédentes, le nombre d'éléments magnétisables répartis (105) étant disposés sur un film porteur.

14. Capteur de position (100) selon l'une des revendications précédentes, le processeur (107) étant en outre conçu pour déterminer la position de l'objet magnétique (101) en fonction d'une valeur de perte par courants de Foucault de la bobine plane (103).

Fig. 1

Fig. 2

EP 3 198 233 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6605939 B1
- EP 1158266 A1
- DE 4311973 A1
- EP 1721130 B2